# EUROPEAN PATENT APPLICATION

(11) **EP 1 821 360 A2**
(43) Date of publication of application: **22.08.2007**
(21) Application number: 07102440.0
(22) Date of filing: 15.02.2007
(51) Int. Cl.: H01M 8/04

(54) **Method of cleaning fuel cell**

(30) Priority: 17.02.2006 US 774763 P
(71) Applicant: Nuvera Fuel Cells, Inc., Cambridge, MA 02140 (US)
(72) Inventor: Beverage, Kevin, Millbury, MA 01527 (US)
(74) Representative: Reitstötter - Kinzebach

(57) **Abstract**

Methods of cleaning a fuel cell are described. The methods include providing a cleansing agent containing an acid or alcohol to an anode or cathode compartment in a fuel cell.

## Description

### CROSS REFERENCE TO RELATED APPLICATION

Pursuant to 35 U.S.C. § 119(e), this application claims priority to U.S. Provisional Application Serial No. 60/774,763, filed February 17, 2006, the contents of which are hereby incorporated by reference.

### TECHNICAL FIELD

The field of invention pertains to fuel cell stack operation and maintenance.

### BACKGROUND

Polymer electrolyte membrane (PEM) fuel cells are devices where hydrogen and oxygen can react to generate electricity. Typically, PEM fuel cells contain a membrane electrode assembly (MEA) sandwiched by two biploar plates, such as graphite bipolar plates that have flow channels on their surfaces. PEM fuel cells can also contain a current collector between a MEA and a bipolar plate. A current collector is often made of electrically-conductive reticulate materials. Reticulate current collectors can be used together with metal bipolar plates. A MEA usually includes a layer of polymeric membrane with anode and cathode electrocatalysts on each side. The MEA can be sandwiched between two gas diffusion layers (GDLs). The GDLs are often made of porous graphite materials such as carbon cloth and carbon paper.

During operation, a reactant gas (e.g., hydrogen or oxygen) can flow convectively through a current collector between a MEA and a bipolar plate, e.g., in flow channels on the bipolar plate or through the pores of reticulate materials in the current collector. The reactant gas can then diffuse through a gas diffusion layer to reach an electrocatalyst on the polymeric membrane in the MEA. On the anode electrocatalyst, hydrogen dissociates to electrons and protons. The protons can then move from the anode side through the polymer membrane to the cathode side, where they react with oxygen on the cathode electrocatalyst to generate water. A feature of a membrane in MEA is that, when well moisturized, it can conduct protons from the anode side of the membrane to the cathode side of the membrane. When it is not well moisturized, however, the membrane can be a poor conductor for protons. Thus, a dry membrane typically reduces the performance of a fuel cell and may eventually lead to failure. It is therefore desirable to keep the membrane well moisturized at all times during operation.

### SUMMARY

In one aspect, the invention features a method of cleaning a fuel cell. The method includes providing a cleansing agent (e.g., a cleansing solution) to an anode or cathode compartment in a fuel cell. The cleansing agent can include an acid or an alcohol. The term "acid" mentioned herein refers to a Bronsted-Lowry acid. Examples of suitable acids include NaHSO₄, H₂SO₄, KHSO₄, HNO₃, and HCl. The cleansing agent can include from about 0.01 M to about 2 M (e.g., from about 0.01 M to about 0.5 M or from about 0.1 M to about 0.2 M) of an acid. Examples of suitable alcohols include methanol, ethanol, propanol (e.g., n-propanol or iso-propanol), and butanol (e.g., n-butanol or isobutanol). The cleansing agent can contain about 5 wt% to about 20 wt% of an alcohol.

The fuel cell can be cleaned by passing the cleansing agent through the anode or cathode compartment for about 10 minutes to about 20 hours. In some embodiments, the cleansing agent can be circulated through the anode or cathode compartment. In certain embodiments, the cleansing agent can flow in a direction substantially opposite to a direction of a cooling water flow. In some embodiments, the fuel cell can also be cleaned by maintaining (i.e., without flowing) the cleansing agent within the anode or cathode compartment for a predetermined period of time (e.g., from about 10 minutes to about 2 days).

The fuel cell can be a direct water injection (DWI) fuel cell or a fuel cell that includes a cooling cell disposed external and adjacent to the anode or cathode compartment.

In another aspect, the invention features a method that includes flowing water through an anode or cathode compartment of a DWI fuel cell at a flow rate of at least about twice (e.g., at least three times or at least five times) as much as a cooling water flow rate.

In another aspect, the invention features a method that includes flowing a cooling fluid through an anode or cathode compartment in a fuel cell to maintain a fuel cell operating temperature from about 60°C to about 90°C. The cooling fluid can contain an acid or an alcohol.

In still another aspect, the invention features a fuel cell that contains an anode or cathode compartment and a cleansing agent disposed in the anode or cathode compartment. The cleansing agent can contain an acid or an alcohol.

The general and specific aspects described above can be implemented in a single fuel cell or a system containing a plurality of fuel cells.

These and other embodiments may have one or more of the following advantages: The methods described above can be used to remove scales or contaminants in a fuel cell and improve its performance. Without wishing to be bound by any theory, it is believed that degradation in fuel cell performance is at least partially due to blockage of water or gas passages by scales formed in the fuel cell. Flowing a cleansing agent through the fuel cell can help breaking loose and/or dissolving the scales and removing them with the cleansing agent. A fuel cell can also be contaminated with contaminants formed from the reactant gases or from the fuel cell components. For example, metal ions formed from metal parts can deposit on the polymeric membrane and cause deterioration of the membrane's mechanical properties and electric conductivity characteristics. Washing a fuel cell with a cleansing agent can remove such contaminants. Note that, when an acid is used in a cleansing agent, the fuel cell is preferably cleaned at a suitable acid concentration (e.g., from about 0.01 M to about 2 M) for a suitable cleansing time to minimize corrosion of fuel cell components. Typically, the higher the acid concentration, the shorter the cleansing time.

Other aspects, features, and advantages will become apparent by the following detailed description, the drawings, and the claims.

### DESCRIPTION OF DRAWINGS

The foregoing and other objects, features and advantages of the invention will be apparent from the following more particular description of embodiments of the invention, as illustrated in the accompanying drawings, in which like reference characters refer to the same parts throughout the different views. The drawings do not include all the components needed in a fuel cell power plant, emphasis instead being placed upon illustrating the principles of the invention.
Fig. 1 is a schematic showing an embodiment of a setup for cleaning a direct water injection fuel cell stack.
Fig. 2 is a figure showing the differences in cell voltage before and after a direct water injection fuel cell stack is washed with a cleaning agent.

### DETAILED DESCRIPTION

In general, approximately 40% or more of the energy contained in the reactant gases for a PEM fuel cell is released as reaction heat while the rest is converted to electricity. The reaction heat has to be removed to maintain a suitable fuel cell operating temperature (e.g., from about 60°C to about 90°C). The fuel cell can be cooled by directly injecting water into an anode or cathode compartment, or cooled by a coolant (e.g., a cooling fluid or air) in adjacent but separate cooling cells. The former is frequently referred to as direct water injection (DWI) fuel cell. Examples of DWI fuel cells are described in U.S. Patent 6,835,477, the contents of which are incorporated herein by reference.

An advantage of direct water injection is that it simultaneously removes heat from the fuel cell and supplies water to the polymeric membrane in the fuel cell to keep it well moisturized. The cooling water flow rate in a DWI fuel cell cannot be too high to cause flooding in the fuel cell, thereby preventing the reactant gases from access to the electrocatalysts. It cannot be too low so that there is not enough water to be evenly distributed across the polymeric membrane, causing overheating or dehydration of the membrane. The cooling water flow rate in a DWI fuel cell varies according to different fuel cell designs and operation conditions. A cooling water flow rate during the operation of a DWI fuel cell can range from 2 - 20 times of the minimum cooling flow rate. The minimum cooling water flow rate refers to the flow rate needed to remove reaction heat through water evaporation. The reaction heat can be calculated by subtracting electrical output from the thermal input. A minimum cooling water flow rate is usually insufficient to keep the polymeric membrane moisturized. Thus, the cooling water flow rate is typically higher than the minimum flow rate to effectively maintain a suitable fuel cell operating temperature and to keep the polymeric membrane moisturized. For instance, a fuel cell stack that provides 10 kW of electricity requires, depending on the efficiency of the fuel cell stack, a minimum of about 3 to about 4 gram/sec of water to remove the heat via water evaporation. Accordingly, the cooling water flow rate can range from about 6 to about 80 gram/sec.

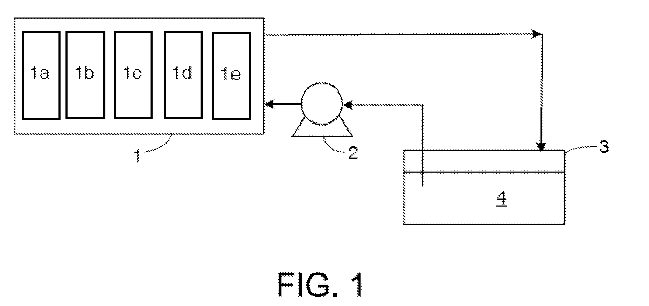

Fig. 1 shows a setup for cleaning a fuel cell that includes a fuel cell stack 1 containing a plurality of fuel cells (such as fuel cells 1a, 1b, 1c, 1d, and 1e), a circulation pump 2, and a reservoir 3 which contains a liquid cleansing agent 4. The cleansing agent 4 is pumped through the fuel cell stack, e.g., through an anode or cathode compartment (not shown in Fig.1) in each fuel cell. The exiting flow is then circulated back to the reservoir 3. The fuel cell stack 1 can contain DWI fuel cells, fuel cells having separate cooling cells, or air-cooled fuel cells. The cleansing agent 4 can be water, an acidic solution, or an alcoholic solution.

In some embodiments, an acidic solution can be used to wash a DWI fuel cell stack using the setup described in Fig. 1. The solution can flow through an anode or cathode compartment of each fuel cell in a direction substantially opposite to that of the cooling water. For example, the solution can enter each fuel cell through an outlet of the cooling water and exit through an inlet of the cooling water. One advantage of using this approach is that such reverse flow departs from a regular flow pattern and can reach areas in an anode or cathode compartment that are otherwise not reachable. The acidic solution can also flow in the same direction as that of the cooling water.

The acidic solution can have any suitable flow rate from as low as zero to as high as a rate that does not cause leakage or deformation due to high liquid pressure inside the fuel cell. For example, the acidic solution can have a flow rate similar to or at least about twice of the cooling water flow rate. As another example, the flow rate of the acidic solution can be as low as zero. In other words, the fuel cell can be cleaned by filling the anode or cathode compartment with the acidic solution and allowing the anode or cathode compartment to be soaked in the solution for a certain period of time (e.g., from about 10 minutes to about 2 days). In such cases, contaminants or scales can be dissolved or suspended in the acidic solution without the assistance of turbulence caused by the flow of the acidic solution.

In some embodiments, an acidic solution can be used to wash the anode and cathode compartment of a fuel cell having separate cooling cells using the setup described in Fig. 1. In such embodiments, the acidic solution can enter or exit the fuel cell through the inlet or outlet of the reactant gases. The flow rate of the acidic solution can range from as low as zero to as high as a rate that does not cause damage to the fuel cell.

In some embodiments, an alcoholic solution can replace an acidic solution as a cleansing agent. Examples of alcohols include methanol, ethanol, propanol, butanol, and a mixture thereof.

In some embodiments, pure water can be used as a cleansing agent to wash a fuel cell. In such embodiments, the water flow rate can be substantially higher than the cooling water flow rate. For example, it can be at least about twice (e.g., at least about three times or at least about five times) as high as the cooling water flow rate.

A fuel cell stack can be taken out of operation periodically and washed with a cleansing agent. It can also be washed with a cleansing agent whenever performance deterioration occurs. Alternatively, the cooling water can be used as a cleansing agent by adding an acid or an alcohol to it. In such cases, the cooling water can be passed through an anode or cathode compartment during the operation of a fuel cell, thereby preventing contaminants and scales from forming and depositing inside the fuel cell. When the cooling water contains an acid, the acid concentration of the cooling water preferably ranges from about 0.01 M to about 0.5 M.

The following example is illustrative and not intended to be limiting.

### Example

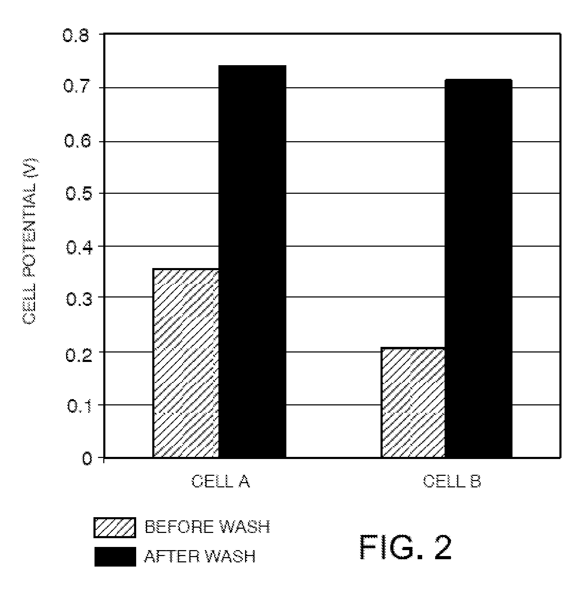

A fuel cell stack was taken offline for maintenance after two fuel cells in the stack exhibited abnormal low voltage. A solution of 0.1 M NaHSO₄ was introduced into the fuel cell stack in the reverse direction of normal cooling water flow. The fuel cells were substantially filled with the solution. A circulation pump was used to circulate the solution at a flow rate three times of the cooling water flow rate. The circulation was conducted overnight. The stack was then purged, rinsed, and put back to work. Figure 2 shows the differences in voltage of the two fuel cells before and after the above treatment. Unexpectedly, these two cells exhibited significant increase in their voltages under the same operation conditions after the above treatment. Specifically, their voltages increased from 0.35 V to 0.74 V and from 0.21 V to 0.71 V, respectively.

Other embodiments are in the claims.

## Claims

1. A method, comprising:
providing a cleansing agent to an anode or cathode compartment in a fuel cell, wherein the cleansing agent comprises an acid or an alcohol.

2. The method of claim 1, wherein the cleansing agent comprises an alcohol selected from the group consisting of methanol, ethanol, propanol, and butanol.

3. The method of claim 1 or 2, wherein the cleansing agent comprises from about 5 wt% to about 20 wt% of an alcohol.

4. The method of claim 1, wherein the cleansing agent comprises an acid selected from the group consisting of NaHSO₄, H₂SO₄, KHSO₄, HNO₃, and HCl.

5. The method of claim 1 or 4, wherein the cleansing agent comprises from about 0.01 M to about 2 M of an acid.

6. The method of claim 5, wherein the cleansing agent comprises from about 0.1 M to about 0.2 M of an acid.

7. The method of any one of the preceding claims, further comprising providing the cleansing agent to flow in a direction substantially opposite to a direction of a cooling water flow.

8. The method of any one of the preceding claims, further comprising circulating the cleansing agent through the anode or cathode compartment.

9. The method of any one of the preceding claims, further comprising passing the cleansing agent through the anode or cathode compartment for about 10 minutes to about 20 hours.

10. The method of any one of the preceding claims, further comprising:
maintaining the cleansing agent within the anode or cathode compartment for a predetermined period of time.

11. The method of any one of the preceding claims, wherein the fuel cell is a DWI fuel cell.

12. The method of any one of the preceding claims, wherein the fuel cell comprises a cooling cell disposed external and adjacent to the anode or cathode compartment.

13. A method, comprising flowing water through an anode or cathode compartment of a DWI fuel cell at a flow rate of at least about twice as much as a cooling water flow rate.

14. The method of claim 13, wherein the flow rate of water is at least 3 times as much as the cooling water flow rate.

15. The method of claim 13, wherein the flow rate of water is at least 5 times as much as the cooling water flow rate.

16. A method, comprising:
flowing a cooling fluid through an anode or cathode compartment in a fuel cell to maintain a fuel cell operating temperature from about 60°C to about 90°C, wherein the cooling fluid comprises an acid or an alcohol.

17. The method of claim 16, wherein the cooling fluid comprises from about 0.01M to about 0.5 M of an acid.

18. The method of claim 16 or 17, wherein the cooling fluid comprises an acid selected from the group consisting of NaHSO₄, H₂SO₄, KHSO₄, HNO₃, and HCl.

19. The method of 16, wherein the cooling fluid comprises an alcohol selected from the group consisting of methanol, ethanol, propanol, and butanol.

20. A fuel cell, comprising:
an anode or cathode compartment; and
a cleansing agent disposed in the anode or cathode compartment, wherein the cleansing agent comprises an acid or an alcohol.

21. The fuel cell of claim 20, wherein the cleansing agent comprises an acid selected from the group consisting of NaHSO₄, H₂SO₄, KHSO₄, HNO₃, and HCl.

22. The fuel cell of claim 20 or 21, wherein the cleansing agent comprises from about 0.01 M to about 2 M of an acid.

23. The fuel cell of claim 22, wherein the cleansing agent comprises from about 0.1 M to about 0.2 M of an acid.

24. The fuel cell of any one of claims 20 to 23, wherein the fuel cell is a DWI fuel cell.
